# EUROPEAN PATENT SPECIFICATION

(11) **EP 2 693 680 B1**
(45) Date of publication and mention of the grant of the patent: **09.12.2015**
(21) Application number: 11862420.4
(22) Date of filing: 31.03.2011
(51) Int. Cl.: H04L 9/06, H04L 12/22, G06F 21/55

(54) **APPARATUS SAFE FROM POWER CONSUMPTION ANALYSIS ATTACK FOR ENCRYPTING AND METHOD FOR OPERATING SAME**
GEGEN STROMVERBRAUCHSANALYSEATTACKEN SICHERE VERSCHLÜSSELUNGSVORRICHTUNG UND BETRIEBSVERFAHREN DAFÜR
APPAREIL DE CHIFFREMENT À L'ÉPREUVE DES ATTAQUES D'ANALYSE DE CONSOMMATION D'ÉNERGIE ÉLECTRIQUE ET SON PROCÉDÉ D'EXPLOITATION

(43) Date of publication of application: 05.02.2014
(73) Proprietor: IUCF-HYU (Industry-University Cooperation Foundation Hanyang University), Seongdong-gu, Seoul 133-791 (KR)
(72) Inventor: KIM, Dong Kyue, Seoul 130-718 (KR); CHOI, Byong Deok, Seoul 134-840 (KR); KIM, Tae Wook, Seoul 133-791 (KR)
(74) Representative: Deambrogi, Edgardo
(86) International application number: PCT/KR2011/002246
(87) International publication number: WO 2012/133966

(56) References cited:
- DE-A1- 19 911 673
- KR-A- 20040 071 509
- KR-A- 20050 054 774
- KR-A- 20050 054 774
- KR-A- 20110 022 352
- US-A1- 2004 145 339

## Description

### Technical Field

The present invention relates to a field of digital security, and more particularly, to an encryption apparatus secure from a power analysis attack and an operating method thereof.

### Background Art

In the past, an important factor in security of a cryptosystem was an encryption algorithm using a secret key. Accordingly, research for the security of the cryptosystem has focused on protection against direct attacks on the secret key and the encryption algorithm.

However, an actual cryptosystem is vulnerable to direct attacks on the secret key and the encryption algorithm, and an indirect attack through measurement of physical values, such as a plurality of input/output signals, for example a magnitude of voltage or current, and the like, and a variety of leakage information, for example, radiation of an electromagnetic wave, a change in power, and the like.

An act of disabling a cryptosystem by measuring such physical values without depacking a chip may be referred to as a non-invasive attack. Among such non-invasive attacks, an act of disabling the cryptosystem using an input value, an output value, and other additional physical information may be referred to as a side-channel attack.

An attack on a cryptosystem may be understood as an analysis on an operation of each module in the cryptosystem. The side-channel attack may be classified into a few types, based on an analysis scheme. A timing attack may reveal contents of a code based on a difference in an operating time between operations. A power consumption analysis attack may reveal the contents of the code by measuring an amount of power consumed for encryption and decryption. A differential electromagnetic attack may reveal the contents of the code by measuring a leakage electromagnetic wave during an operation.

Among the side-channel attacks, the power consumption analysis attack may

also be simply referred to as a power analysis attack. The power analysis attack may be classified into a simple power analysis (SPA) of measuring and simply analyzing a current value of a power source during an operation, a differential power analysis (DPA) of analyzing a current statistically, and a high-order differential power analysis of performing a high-order analysis through combination of various DPAs.

US 2004/0145339 discloses a method for protecting an electronic entity such as a smart card against simple/differential power analysis.

A defensive technique against such a side-channel attack may include a hiding technique of enabling an amount of power consumed to be constant or random for removing a correlation between a power consumption and data, mainly, a secret key, and a masking technique of removing a correlation between the power consumption and the data, mainly, the secret key, by randomizing data during an intermediate process of the operation.

Here, the hiding technique may be implemented by employing a software approach scheme or a hardware approach scheme. In the hardware approach scheme, a correlation between a type of the operation and a current value of the power source may be hidden, and a difference in a current value pattern a of input and output values may be removed. Accordingly, interest in the hardware approach scheme is increasing.

Schemes of implementing the hiding technique for preventing a power analysis attack may include a precharge logic by which a voltage and/or a current to be input to an encryption module, and output from the encryption module may have identical values.

Although the precharge logic may enable the voltage and/or the current to be input to the encryption module, and output from the encryption module to have identical values in theory, the precharge logic may fail to guarantee consistency in actual implementation of the encryption module.

### Disclosure of Invention

### Technical Goals

An aspect of the present invention provides an encryption apparatus and operating method thereof that may guarantee a higher level of consistency of a value of voltage or current to be input to or output from an encryption module, when compared to a conventional encryption apparatus.

### Technical solutions

According to an aspect of the present invention, there is provided an encryption apparatus, including an encryption module to perform an encryption algorithm, and a control module to control charge transfer from an external power source to the encryption module by controlling a current path between the encryption module and the external power source.

In this instance, the control module may electrically block the current path between the encryption module and the external power source.

The control module may include a charge storage unit to store a charge, and to supply the stored charge to the encryption module.

The encryption module may be connected to a separate ground node differing from a ground node of the external power source.

The charge storage unit may include a capacitor to store a charge. In this instance, the control module may further include a first charge transfer unit to charge the capacitor by transferring, to the charge storage unit, charge supplied by the external power source, in a first state corresponding to a time period before the encryption algorithm is performed.

The first charge transfer unit may include a first switch to short or to open an electrical connection between a VDD node corresponding to an anode of the external power source and a first terminal of the capacitor, and a second switch, triggered with the first switch, simultaneously, to short or open an electrical connection between a GND (ground node) corresponding to a ground node of the external power source and a second terminal of the capacitor.

The control module may further include a second charge transfer unit to transfer, to the encryption module, a charge supplied by the charge storage unit, in a second state corresponding to a time period during which the encryption algorithm is performed.

The second charge transfer unit may include a third switch to short or to open an electrical connection between a first terminal of the capacitor and a first terminal of the encryption module, and a fourth switch, triggered with the third switch, simultaneously, to short or open an electrical connection between a second terminal of the capacitor and a second terminal of the encryption module.

The charge storage unit may further include a fifth switch, to be closed in a third state corresponding to a time period after the encryption algorithm is performed, to discharge the capacitor included in the charge storage unit.

According to another aspect of the present invention, there is provided an encryption apparatus, including an encryption module to perform an encryption algorithm, a first charge transfer unit to receive power supplied by an external power source, in a first state corresponding to a time period before the encryption algorithm is performed, a charge storage unit to store a charge received and transferred by the first charge transfer unit, in the first state, and a second transfer unit to transfer the charge stored in the charge storage unit to the encryption module, in a second state corresponding to a time period during which the encryption algorithm is performed. Here, the first charge transfer unit may disconnect a ground terminal of the encryption module from a ground terminal of the external power source, in the second state.

According to still another aspect of the present invention, there is provided a method of operating an encryption apparatus including an encryption module to perform an encryption algorithm, the method including storing, by a first charge transfer unit included in the encryption apparatus, power supplied by an external power source in a charge storage unit included in the encryption apparatus, in a first state corresponding to a time period before the encryption algorithm is performed, transferring, by a second charge transfer unit included in the encryption apparatus, a charge stored in the charge storage unit to the encryption module, and performing, by the encryption module, the encryption algorithm, in a second state corresponding to a time period during which the encryption algorithm is performed, and discharging, by the charge storage unit, a charge storing device included in an internal portion of the charge storage unit storing a charge, in a third state corresponding to a time period after the encryption algorithm is performed.

### Advantageous Effects

According to an embodiment of the present invention, a power analysis attack on an encryption module may be prevented, by enabling a current to be supplied by an external power source to the encryption module to be completely unrelated to operation) of an algorithm of the encryption module, and guaranteeing a higher level of consistency of a value of voltage or current to be input to or output from the encryption module.

### Brief Description of Drawings

FIG. 1 illustrates an encryption apparatus according to an embodiment of the present invention.
FIG. 2 illustrates a detailed example of an encryption apparatus according to an embodiment of the present invention.
FIG. 3 illustrates a first state in which an encryption apparatus may charge a capacitor using a supplied charge from an external power source according to an embodiment of the present invention.
FIG. 4 illustrates a second state in which an encryption apparatus may perform an encryption algorithm using a charge stored on a capacitor according to an embodiment of the present invention.
FIG. 5 illustrates a third state in which an encryption apparatus may discharge a capacitor to a predetermined level and/or discharge entirely after an encryption algorithm is performed according to an embodiment of the present invention.

### Best Mode for Currying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

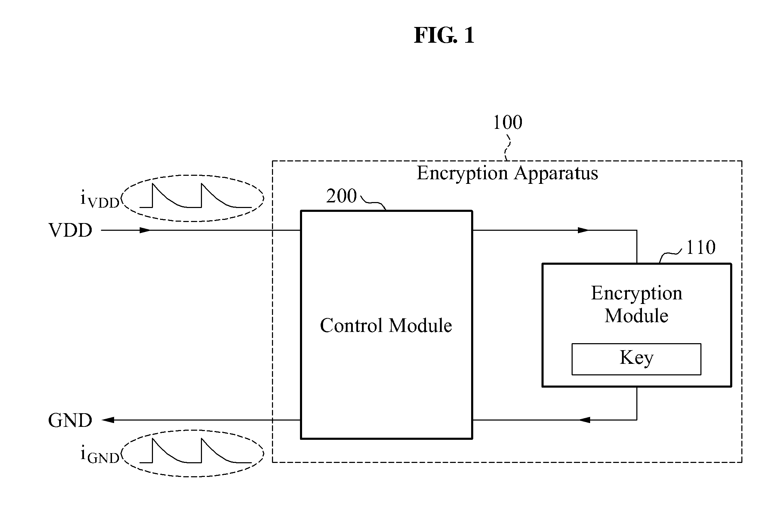

FIG. 1 illustrates an encryption apparatus 100 according to an embodiment of the present invention.

The encryption apparatus 100 may include an encryption module 110, and a control module 200. The encryption module 110 may perform an algorithm by receiving a charge supplied by the control module 200. The control module 200 may be connected to a VDD node and a ground (GND) node, and may receive a charge supplied by an external power supply, and may supply the received charge to the encryption module 110 by an operating method which will be described later.

The encryption module 110 may not be construed to be limited to a configuration or an algorithm of a specific encryption circuit. Accordingly, unless otherwise mentioned, the encryption module 110 may include various well-known configurations for performing an encryption algorithm using an encryption key.

As shown in FIG. 1, according to embodiments of the present invention, a current i_{VDD} to be input from a VDD node that supplies a current to the encryption apparatus 100 may have a constant value, irrespective of an encryption key to be operated by the encryption module 110. A current i_{GND} to be output from the encryption apparatus 100 to a GND node may also have a constant value, irrespective of the encryption key to be operated by the encryption module 110. Accordingly, a power analysis attack using a non-invasive scheme may be prevented in an effective manner.

According to a conventional technology, the encryption apparatus 100 may have another physical connection to an external system, in addition to the VDD node and the GND node, in reality, irrespective of an intended design.

In particular, the GND node may be a common node between the encryption apparatus 100 and other external circuits. Accordingly, when a connection between the encryption apparatus 100 and the VDD node is opened such that i_{VDD} = 0, the output current i_{GND} may not correspond to 0 exactly.

According to the conventional technology, a possibility of a power analysis attack by voltage probing of the GND node, or by measuring i_{GND} of a precise level may not be excluded completely.

However, according to embodiments of the present invention, when the connection between the encryption apparatus 100 and the VDD node is opened, a connection between the encryption apparatus 100 and the GND node may be opened as well. Accordingly, the possibility of the power analysis attack through the voltage probing at the GND node while the encryption algorithm is performed may be blocked.

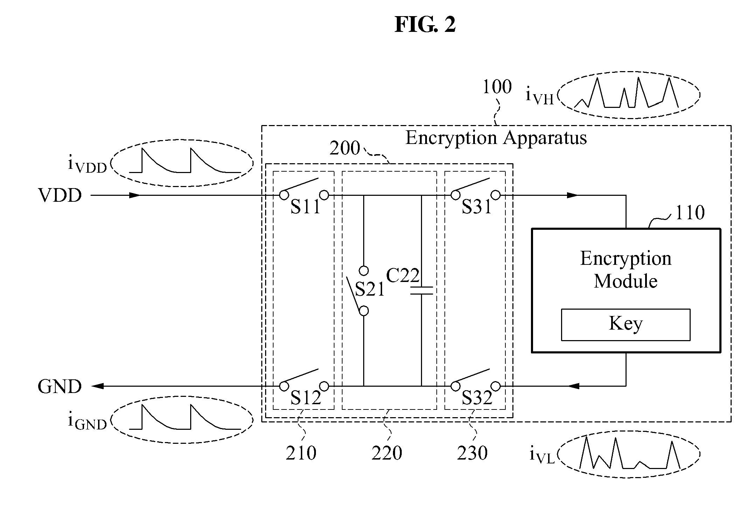

A configuration of the encryption apparatus 100 and an operating method thereof will be described in detail with reference to FIG. 2 and subsequent drawings.

FIG. 2 illustrates a detailed example of the encryption apparatus 100 according to an embodiment of the present invention.

The control module 200 may include a first charge transfer unit 210, a charge storage unit 220, and a second charge transfer unit 230.

The first charge transfer unit 210 may include a switch S11 to determine whether the connection between the encryption apparatus 100 and the VDD node is to be shorted or opened, and a switch S12 to determine whether the connection between the encryption apparatus 100 and the GND node is to be shorted or opened.

Here, the switch S11 and the switch S12 may be triggered simultaneously. When the connection between the encryption apparatus 100 and the VDD node is opened, the connection between the encryption apparatus 100 and the GND node may be fully opened.

The charge storage unit 220 may include a capacitor C22 to store a charge received from the first charge transfer unit 210, and a shunt switch S21 to discharge the capacitor C22, as necessary.

The second charge transfer unit 230 may include a switch S31 and a switch S32 as portions which may transfer a current to be used for operating the encryption module 110, from the charge storage unit 220 to the encryption module 110.

The switch S31 and the switch S32 may be triggered simultaneously. When the switch S31 and the switch S32 are opened, a node between the encryption module 110 and the second charge transfer unit 230 in the encryption apparatus 100 may be fully opened.

Each element illustrated in a form of a circuit may be implemented by various circuit modules or devices which may be implementable in reality. For example, the switches according to an embodiment of the present invention may be implemented by various well-known devices, for example, a complementary metal-oxide-semiconductor (CMOS) switch, and the like.

A series of operations for receiving a charge supplied by an external power source through the VDD node and the GND node, and performing an encryption algorithm using the supplied charge in the encryption apparatus 100 may be performed sequentially, and may be classified into three states, which may be iterated as necessary.

The three states may include a first state S1 in which the first charge transfer unit 210 may transfer the charge supplied by the external power source to the charge storage unit 220 to charge the capacitor C22, a second state S2 in which the second charge transfer unit 230 may transfer the charge stored in the capacitor C22 to the encryption module 110, and the encryption algorithm may be performed, and a third state S3 in which the capacitor C22 may be discharged.

The first state S1, the second state S2, and the third state S3 may constitute a single cycle of performing the encryption algorithm, and the first state S1, the second state S2, and the third state S3 may be iterated based on the cycle, as necessary, for example, in an order of S1 - S2 - S3 - S1 -...

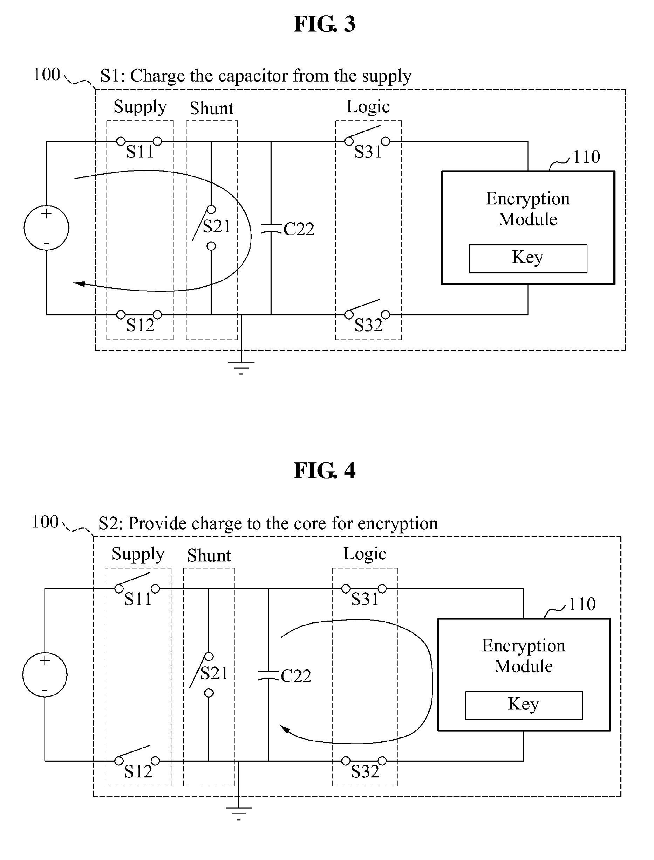

Operations of the first charge transfer unit 210, the charge storage unit 220, and the second charge transfer unit 220 in each of the first state S1, the second state S2, and the third state S3 will be further described with reference to FIGS. 3 through 5.

FIG. 3 illustrates the first state S1 in which the encryption apparatus 100 of FIG. 1 may charge the capacitor C22 of FIG. 2 using a supplied charge according to an embodiment of the present invention.

In the first state S1, the first charge transfer unit 210 may transfer a charge supplied by the external power source to the capacitor C22 of the charge storage unit 220, to charge the capacitor C22.

In the first state S1, although the switch S11 and the switch S12 may be closed to charge the capacitor C22, the switch S31 and the switch S32 may be opened to disconnect the encryption module 110 from an outside of the encryption apparatus 100. That is, in the first state S1, the second charge transfer unit 230 may block a connection between the charge storage unit 220 and the encryption module 110.

In this instance, the capacitor C22 may constantly be in a complete discharge state. Accordingly, the current i_{VDD} supplied by the external power source may be determined based on only a capacitance of the capacitor C22. That is, the current i_{VDD} supplied by the external power source may be completely unrelated to a value of an encryption key of the encryption module 110 that is performed in a previous state.

FIG. 4 illustrates the second state S2 in which the encryption apparatus 100 of FIG. 1 may perform an encryption algorithm using a charge used to charge the capacitor C22 according to an embodiment of the present invention.

In the second state S2, the first charge transfer unit 210 may completely disconnect the charge storage unit 220 from an outside of the encryption apparatus 100. As shown in FIG. 4, the switch S11 and the switch S12 may be opened simultaneously, and the charge storage unit 220 in the encryption apparatus 100 may be completely separated from both the VDD node and the GND node, that is, two nodes of the external power source.

In the second state S2, the charge storage unit 220 may supply a charge to the encryption module 110 through the second charge transfer unit 230, and the encryption module 110 may perform the encryption algorithm using the supplied charge.

During the encryption process, an amount of a charge consumed by the encryption module 110, that is, an amount of current, may be dependent on a value of an encryption key. However, since the outside of the encryption apparatus 100, for example, the NDD node and the GND node of FIG. 2 may be disconnected from the encryption module 110, a power analysis attack may be impossible.

A residual charge after supplying the encryption module 110 may be still present in the capacitor C22. Since the residual charge may correspond to an amount of charge remaining after being used in the encryption module 110, the residual charge may be dependent on the value of the encryption key. Accordingly, when the residual charge is discharged directly to the GND node, a power analysis attack may be possible by measuring a current i_{VDD} flowing through the GND node. Thus, in order to prevent the power analysis attack, the first state S1 for re-charging may proceed after the residual charge is discharged through thermal dissipation and radiation, by shorting both ends of the capacitor C22, instead of discharging the residual charge to the GND node.

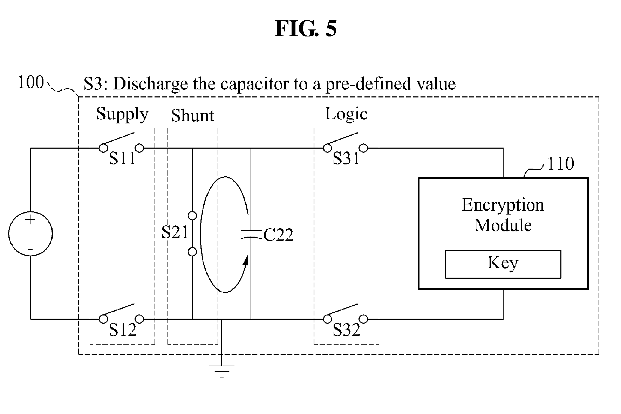

FIG. 5 illustrates the third state S3 in which the encryption apparatus of FIG. 1 may discharge the capacitor C22 to a predetermined level and/or discharge entirely after an encryption algorithm is performed according to an embodiment of the present invention.

In the third state S3, a residual charge of the capacitor C22 may be discharged to the predetermined level and/or discharge entirely after the encryption algorithm is performed.

In the third state S3, the shunt switch S21 may be closed to discharge the capacitor C22. The discharge may be determined based on a resistance component (not shown) between the shunt switch S21 and the capacitor C22, and a capacitance of the capacitor C22. However, since the discharge may be performed in an extremely short period of time, the discharge may be completed to a predetermined level at which a power analysis is impossible, before a first state S1 of a subsequent cycle starts. The predetermined level may be understood as a level at which a power analysis attack may be impossible.

In the third state S3, the first charge transfer unit 210 may disconnect the charge storage unit 220 from the external power source, and the second charge transfer unit 230 may disconnect the charge storage unit 220 from the encryption module 110.

Depending on embodiments, an operation of opening all the switches may be added to a state-transition of each state of the first state S1, the second state S2, and the third state S3, so that each state may not overlap each other. Various embodiments may be extended with respect to other operations for preventing the power analysis attack.

As described above, the current i_{VDD} to be input through the VDD node supplying a current to the encryption apparatus 100 may have a constant value, irrespective of an encryption key to be operated by the encryption module 110, and the current i_{GND} to be output from the encryption apparatus 100 to the GND node may also have a constant value, irrespective of the encryption key to be operated by the encryption module 110.

Accordingly, the power analysis attack may be effectively prevented while the encryption algorithm is performed, and/or in various states, for example, while the charge storage unit 220 receives a charge supplied by the external power source, and the like.

The above-described exemplary embodiments of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM discs and DVDs; magneto-optical media such as floptical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

Although a few embodiments of the present invention have been shown and described, the present invention is not limited to the described embodiments. Instead, it would be appreciated by those skilled in the art that changes may be made to these embodiments without departing from the principles of the invention, the scope of which is defined by the claims and their equivalents.

## Claims

1. An encryption apparatus, comprising:
an encryption module to perform an encryption algorithm;
a control module adapted to transfer, to the encryption module, a charge supplied by an external power source by controlling a current path between the encryption module and the external power source at least in a time period before the encryption algorithm is performed and in a time period during which the encryption algorithm is performed;
**characterized in that** controlling a current path between the encryption module and the external power source comprises disconnecting a ground terminal of the encryption module from a ground terminal of the external power source in the time period during which the encryption algorithm is performed.

2. The encryption apparatus according to claim 1, wherein the control module comprises:
a first charge transfer unit to receive charge supplied by the external power source, in a first state corresponding to a time period before the encryption algorithm is performed;
a charge storage unit to store a charge received and transferred by the first charge transfer unit, in the first state; and
a second charge transfer unit to transfer the charge stored in the charge storage unit to the encryption module, in a second state corresponding to a time period during which the encryption algorithm is performed.

3. The encryption apparatus according to claim 2,
wherein the first charge transfer unit is adapted to disconnect a ground terminal of the encryption module from a ground terminal of the external power source, in the second state.

4. The encryption apparatus of claim 1, wherein the encryption module is connected to a separate ground node differing from a ground node of the external power source.

5. The encryption apparatus of claim 2, wherein the charge storage unit comprises:
a capacitor to store a charge.

6. The encryption apparatus of claim 5, wherein the first charge transfer unit comprises:
a first switch to short or to open an electrical connection between a VDD node corresponding to an anode of the external power source and a first terminal of the capacitor; and
a second switch, triggered with the first switch, simultaneously, to short or open an electrical connection between a GND corresponding to a ground node of the external power source and a second terminal of the capacitor.

7. The encryption apparatus of claim 5, wherein the second charge transfer unit comprises:
a third switch to short or to open an electrical connection between a first terminal of the capacitor and a first terminal of the encryption module; and
a fourth switch, triggered with the third switch, simultaneously, to short or open an electrical connection between a second terminal of the capacitor and a second terminal of the encryption module.

8. The encryption apparatus of claim 5, wherein the charge storage unit further comprises:
a fifth switch, to be closed in a third state corresponding to a time period after the encryption algorithm is performed and corresponding to a time period before a separate encryption algorithm following the encryption algorithm is performed, to discharge the capacitor included in the charge storage unit.

9. The encryption apparatus of claim 8, wherein the fifth switch is adapted to discharge the capacitor by shorting two terminals of the capacitor.

10. An operating method of an encryption apparatus including an encryption module to perform an encryption algorithm, the method comprising:
controlling a current path between the encryption module and an external power source at least in a time period before the encryption algorithm is performed and in time period during which the encryption algorithm is performed, for transferring to the encryption module a charge supplied by the external power source;
wherein controlling a current path between the encryption module and the external power source comprises disconnecting a ground terminal of the encryption module from a ground terminal of the external power source, in the time period during which the encryption algorithm is performed.

11. The operating method according to claim 10, the method comprising:
storing, by a first charge transfer unit included in the encryption apparatus, charge supplied by an external power source in a charge storage unit included in the encryption apparatus, in a first state corresponding to a time period before the encryption algorithm is performed; and
transferring, by a second charge transfer unit included in the encryption apparatus, a charge stored in the charge storage unit to the encryption module, and performing, by the encryption module, the encryption algorithm, in a second state corresponding to a time period during which the encryption algorithm is performed

12. The operating method according to claim 11, the method further comprising:
discharging, by the charge storage unit, a charge storing device included in an internal portion of the charge storage unit storing a charge, in a third state corresponding to a time period after the encryption algorithm is performed.

## Patentansprüche

1. Eine Verschlüsselungsvorrichtung, die folgende Merkmale aufweist:
ein Verschlüsselungsmodul, um einen Verschlüsselungsalgorithmus durchzuführen;
ein Steuermodul, das dazu angepasst ist, an das Verschlüsselungsmodul eine Ladung zu übertragen, die durch eine externe Leistungsquelle bereitgestellt wird, indem es einen Strompfad zwischen dem Verschlüsselungsmodul und der externen Leistungsquelle zumindest in einem Zeitraum, bevor der Verschlüsselungsalgorithmus durchgeführt wird, und in einem Zeitraum, während dessen der Verschlüsselungsalgorithmus durchgeführt wird, steuert;
**dadurch gekennzeichnet, dass** das Steuern eines Strompfades zwischen dem Verschlüsselungsmodul und der externen Leistungsquelle ein Abklemmen eines Masseanschlusses des Verschlüsselungsmoduls von einem Masseanschluss der externen Leistungsquelle in dem Zeitraum, während dessen der Verschlüsselungsalgorithmus durchgeführt wird, aufweist.

2. Die Verschlüsselungsvorrichtung gemäß Anspruch 1, bei der das Steuermodul folgende Merkmale aufweist:
eine erste Ladungsübertragungseinheit zum Empfangen einer durch die externe Leistungsquelle bereitgestellten Ladung in einem ersten Zustand, der einem Zeitraum entspricht, bevor der Verschlüsselungsalgorithmus durchgeführt wird;
eine Ladungsspeicherungseinheit zum Speichern einer Ladung, die durch die erste Ladungsübertragungseinheit empfangen und übertragen wird, in dem ersten Zustand; und
eine zweite Ladungsübertragungseinheit zum Übertragen der in der Ladungsspeicherungseinheit gespeicherten Ladung an das Verschlüsselungsmodul in einem zweiten Zustand, der einem Zeitraum entspricht, während dessen der Verschlüsselungsalgorithmus durchgeführt wird.

3. Die Verschlüsselungsvorrichtung gemäß Anspruch 2,
bei der die erste Ladungsübertragungseinheit dazu angepasst ist, in dem zweiten Zustand einen Masseanschluss des Verschlüsselungsmoduls von einem Masseanschluss der externen Leistungsquelle abzuklemmen.

4. Die Verschlüsselungsvorrichtung gemäß Anspruch 1, bei der das Verschlüsselungsmodul mit einem separaten Masseknoten verbunden ist, der sich von einem Masseknoten der externen Leistungsquelle unterscheidet.

5. Die Verschlüsselungsvorrichtung gemäß Anspruch 2, bei der die Ladungsspeicherungseinheit folgendes Merkmal aufweist:
einen Kondensator zum Speichern einer Ladung.

6. Die Verschlüsselungsvorrichtung gemäß Anspruch 5, bei der die erste Ladungsübertragungseinheit folgende Merkmale aufweist:
einen ersten Schalter zum Kurzschließen oder zum Öffnen einer elektrischen Verbindung zwischen einem VDD-Knoten, der einer Anode der externen Leistungsquelle entspricht, und einem ersten Anschluss des Kondensators; und
einen zweiten Schalter, der gleichzeitig mit dem ersten Schalter ausgelöst wird, zum Kurzschließen oder Öffnen einer elektrischen Verbindung zwischen einer Masse (GND), die einem Masseknoten der externen Leistungsquelle entspricht, und einem zweiten Anschluss des Kondensators.

7. Die Verschlüsselungsvorrichtung gemäß Anspruch 5, bei der die zweite Ladungsübertragungseinheit folgende Merkmale aufweist:
einen dritten Schalter zum Kurzschließen oder zum Öffnen einer elektrischen Verbindung zwischen einem ersten Anschluss des Kondensators und einem ersten Anschluss des Verschlüsselungsmoduls; und
einen vierten Schalter, der gleichzeitig mit dem dritten Schalter ausgelöst wird, zum Kurzschließen oder Öffnen einer elektrischen Verbindung zwischen einem zweiten Anschluss des Kondensators und einem zweiten Anschluss des Verschlüsselungsmoduls.

8. Die Verschlüsselungsvorrichtung gemäß Anspruch 5, bei der die Ladungsspeicherungseinheit ferner folgendes Merkmal aufweist:
einen fünften Schalter, der in einem dritten Zustand, der einem Zeitraum entspricht, nach dem der Verschlüsselungsalgorithmus durchgeführt wird, und einem Zeitraum entspricht, vor dem im Anschluss an den Verschlüsselungsalgorithmus ein getrennter Verschlüsselungsalgorithmus durchgeführt wird, geschlossen werden soll, um den in der Ladungsspeicherungseinheit enthaltenen Kondensator zu entladen.

9. Die Verschlüsselungsvorrichtung gemäß Anspruch 8, bei der der fünfte Schalter dazu angepasst ist, den Kondensator zu entladen, indem er zwei Anschlüsse des Kondensators kurzschließt.

10. Ein Arbeitsverfahren einer Verschlüsselungsvorrichtung, die ein Verschlüsselungsmodul zum Durchführen eines Verschlüsselungsalgorithmus umfasst, wobei das Verfahren folgende Schritte aufweist:
Steuern eines Strompfades zwischen dem Verschlüsselungsmodul und einer externen Leistungsquelle zumindest in einem Zeitraum, bevor der Verschlüsselungsalgorithmus durchgeführt wird, und in einem Zeitraum, während dessen der Verschlüsselungsalgorithmus durchgeführt wird, zum Übertragen einer durch die externe Leistungsquelle bereitgestellten Ladung an das Verschlüsselungsmodul;
wobei das Steuern eines Strompfades zwischen dem Verschlüsselungsmodul und der externen Leistungsquelle ein Abklemmen eines Masseanschlusses des Verschlüsselungsmoduls von einem Masseanschluss der externen Leistungsquelle in dem Zeitraum, während dessen der Verschlüsselungsalgorithmus durchgeführt wird, aufweist.

11. Das Arbeitsverfahren gemäß Anspruch 10, wobei das Verfahren folgende Schritte aufweist:
Speichern, durch eine in der Verschlüsselungsvorrichtung enthaltene erste Ladungsübertragungseinheit, einer durch eine externe Leistungsquelle bereitgestellten Ladung in einer in der Verschlüsselungsvorrichtung enthaltenen Ladungsspeicherungseinheit in einem ersten Zustand, der einem Zeitraum entspricht, bevor der Verschlüsselungsalgorithmus durchgeführt wird; und
Übertragen, durch eine in der Verschlüsselungsvorrichtung enthaltenen zweiten Ladungsübertragungseinheit, einer in der Ladungsspeicherungseinheit gespeicherten Ladung an das Verschlüsselungsmodul und Durchführen des Verschlüsselungsalgorithmus seitens des Verschlüsselungsmoduls, in einem zweiten Zustand, der einem Zeitraum entspricht, während dessen der Verschlüsselungsalgorithmus durchgeführt wird.

12. Das Arbeitsverfahren gemäß Anspruch 11, wobei das Verfahren ferner folgenden Schritt aufweist:
Entladen, seitens der Ladungsspeicherungseinheit, einer Ladungsspeicherungsvorrichtung, die in einem inneren Abschnitt der eine Ladung speichernden Ladungsspeicherungseinheit enthalten ist, in einem dritten Zustand, der einem Zeitraum entspricht, nach dem der Verschlüsselungsalgorithmus durchgeführt wird.

## Revendications

1. Appareil de chiffrement, comprenant :
un module de chiffrement pour réaliser un algorithme de chiffrement ;
un module de commande adapté pour transférer, au module de chiffrement, une charge fournie par une source d'énergie électrique externe en commandant un chemin de courant entre le module de chiffrement et la source d'énergie électrique externe au moins dans une période avant que l'algorithme de chiffrement soit réalisé et dans une période durant laquelle l'algorithme de chiffrement est réalisé ;
**caractérisé en ce que** la commande d'un chemin de courant entre le module de chiffrement et la source d'énergie électrique externe comprend la déconnexion d'une borne de terre du module de chiffrement à partir d'une borne de terre de la source d'énergie électrique externe dans la période durant laquelle l'algorithme de chiffrement est réalisé.

2. Appareil de chiffrement selon la revendication 1, dans lequel le module de commande comprend :
une première unité de transfert de charge pour recevoir une charge fournie par la source d'énergie électrique externe, dans un premier état correspondant à une période avant que l'algorithme de chiffrement soit réalisé ;
une unité de stockage de charge pour stocker une charge reçue et transférée par la première unité de transfert de charge, dans le premier état ; et
une seconde unité de transfert de charge pour transférer la charge stockée dans l'unité de stockage de charge au module de chiffrement, dans un deuxième état correspondant à une période durant laquelle l'algorithme de chiffrement est réalisé.

3. Appareil de chiffrement selon la revendication 2, dans lequel la première unité de transfert de charge est adaptée pour déconnecter une borne de terre du module de chiffrement à partir d'une borne de terre de la source d'énergie électrique externe, dans le deuxième état.

4. Appareil de chiffrement selon la revendication 1, dans lequel le module de chiffrement est connecté à un noeud de terre séparé différent d'un noeud de terre de la source d'énergie électrique externe.

5. Appareil de chiffrement selon la revendication 2, dans lequel l'unité de stockage de charge comprend :
un condensateur pour stocker une charge.

6. Appareil de chiffrement selon la revendication 5, dans lequel la première unité de transfert de charge comprend :
un premier commutateur pour court-circuiter ou pour ouvrir une connexion électrique entre un noeud VDD correspondant à une anode de la source d'énergie électrique externe et une première borne du condensateur ;
et
un deuxième commutateur, déclenché avec le premier commutateur, simultanément, pour court-circuiter ou ouvrir une connexion électrique entre un GND correspondant à un noeud de terre de la source d'énergie électrique externe et une seconde borne du condensateur.

7. Appareil de chiffrement selon la revendication 5, dans lequel la seconde unité de transfert de charge comprend :
un troisième commutateur pour court-circuiter ou pour ouvrir une connexion électrique entre une première borne du condensateur et une première borne du module de chiffrement ; et
un quatrième commutateur, déclenché avec le troisième commutateur, simultanément, pour court-circuiter ou ouvrir une connexion électrique entre une seconde borne du condensateur et une seconde borne du module de chiffrement.

8. Appareil de chiffrement selon la revendication 5, dans lequel l'unité de stockage de charge comprend en outre :
un cinquième commutateur, destiné à être fermé dans un troisième état correspondant à une période après que l'algorithme de chiffrement est réalisé et correspondant à une période avant qu'un algorithme de chiffrement séparé suivant l'algorithme de chiffrement soit réalisé,
pour décharger le condensateur inclus dans l'unité de stockage de charge.

9. Appareil de chiffrement selon la revendication 8, dans lequel le cinquième commutateur est adapté pour décharger le condensateur en court-circuitant deux bornes du condensateur.

10. Procédé de fonctionnement d'un appareil de chiffrement incluant un module de chiffrement pour réaliser un algorithme de chiffrement, le procédé comprenant :
la commande d'un chemin de courant entre le module de chiffrement et une source d'énergie électrique externe au moins dans une période avant que l'algorithme de chiffrement soit réalisé et dans période durant laquelle l'algorithme de chiffrement est réalisé, pour transférer au module de chiffrement une charge fournie par la source d'énergie électrique externe ;
dans lequel la commande d'un chemin de courant entre le module de chiffrement et la source d'énergie électrique externe comprend la déconnexion d'une borne de terre du module de chiffrement à partir d'une borne de terre de la source d'énergie électrique externe, dans la période durant laquelle l'algorithme de chiffrement est réalisé.

11. Procédé de fonctionnement selon la revendication 10, le procédé comprenant :
le stockage, par une première unité de transfert de charge incluse dans l'appareil de chiffrement, de charge fournie par une source d'énergie électrique externe dans une unité de stockage de charge incluse dans l'appareil de chiffrement, dans un premier état correspondant à une période avant que l'algorithme de chiffrement soit réalisé ; et
le transfert, par une seconde unité de transfert de charge incluse dans l'appareil de chiffrement, d'une charge stockée dans l'unité de stockage de charge au module de chiffrement, et
la réalisation, par le module de chiffrement, de l'algorithme de chiffrement, dans un deuxième état correspondant à une période durant laquelle l'algorithme de chiffrement est réalisé.

12. Procédé de fonctionnement selon la revendication 11, le procédé comprenant en outre :
la décharge, par l'unité de stockage de charge, d'un dispositif de stockage de charge inclus dans une portion interne de l'unité de stockage de charge stockant une charge, dans un troisième état correspondant à une période après que l'algorithme de chiffrement est réalisé.
